# FASCICULE DE BREVET EUROPEEN

(11) **EP 2 089 259 B1**
(45) Date de publication et mention de la délivrance du brevet: **30.08.2017**
(21) Numéro de dépôt: 07847921.9
(22) Date de dépôt: 06.12.2007
(51) Int. Cl.: B60T 7/10, B60T 13/74, H01H 47/00

(54) **SYSTEME DE FREIN DE PARKING A COMMANDE ELECTRIQUE**
ELEKTRISCH BEDIENTES FESTSTELLBREMSSYSTEM
PARKING BRAKE SYSTEM WITH ELECTRIC CONTROL

(30) Priorité: 11.12.2006 FR 0610794
(43) Date de publication de la demande: 19.08.2009
(73) Titulaire: Renault S.A.S., 92100 Boulogne-Billancourt (FR)
(72) Inventeur: FEBRER, Pascal, 75014 Paris (FR); HEDOUIN, Gaël, 92800 Puteaux (FR); RODRIGUEZ, Ramiro, 92170 Vanves (FR)
(86) Numéro de dépôt international: PCT/EP2007/063448
(87) Numéro de publication internationale: WO 2008/071623

(56) Documents cités:
- EP-A- 1 686 029
- CA-A1- 2 381 786
- JP-A- 2001 106 057
- JP-A- 2005 081 964
- US-A1- 2004 113 489

## Description

La présente invention concerne un système de frein de parking à commande électrique, et plus particulièrement les moyens de commande du serrage et du desserrage du frein, et leur logique de fonctionnement.

On connaît déjà différents systèmes de commande électrique de freins de parking, le moyen de commande étant généralement un système d'interrupteurs actionnés par un bouton poussoir/tirette ou une « palette ». Des systèmes de frein de parking à commande électrique sont décrits notamment dans CA2381786, JP2001106057, JP2005081964, US 2004/113489. Une commande électrique de frein de parking doit en effet d'une part permettre de transmettre la volonté du conducteur de manière fiable, tel que :
- tirer sur le bouton de commande assure un serrage du frein,
- repousser le bouton de commande assure un desserrage ;
et d'autre part éviter toute action involontaire de serrage ou desserrage.

Actuellement, les commandes électriques de frein de parking comportent généralement quatre ou même six interrupteurs, destinés à établir les contacts électriques requis respectivement pour chaque fonction, à savoir d'une part la commande de desserrage du frein et d'autre part la commande de serrage. Au repos, tous les interrupteurs sont ouverts. Une impulsion brève mais de durée cependant suffisante sur le bouton ou la palette de commande dans un premier sens ferme les interrupteurs dédiés à une fonction, par exemple le serrage du frein, qui reste serré lorsque le bouton ou la palette est relâché et revient de lui-même en position de repos. Une autre impulsion sur le bouton ou la palette de commande dans le sens opposé ferme les interrupteurs dédiés à la deuxième fonction, soit le desserrage du frein, qui, de manière similaire, reste desserré lorsque le bouton ou la palette est relâché et revient en position de repos.

L'utilisation d'une pluralité d'interrupteurs pour chaque fonction est prévue pour assurer par leur redondance une meilleure sécurité, en évitant notamment par exemple qu'un signal électrique parasite, par exemple un court-circuit sur un des raccordements électriques, puisse provoquer à lui seul, et de manière inopportune et dangereuse, une commande du frein. La redondance d'interrupteurs fait que la commande ne sera effectivement exécutée que si tous les interrupteurs associés sont fermés. On comprendra aisément en effet que, par exemple, il est absolument nécessaire qu'un tel défaut électrique ne puisse pas provoquer un serrage des freins intempestif alors que le véhicule est en circulation normale. De même, il est impératif qu'un défaut électrique ne puisse pas non plus provoquer un desserrage des freins sur un véhicule arrêté, par exemple en pente.

Mais cette redondance conduit à multiplier le nombre d'interrupteurs.

La présente invention a pour but de réaliser une économie en réduisant le nombre d'interrupteurs nécessaires sans nuire à la sécurité et à la fiabilité de la commande, et tout en assurant par sa logique d'activation d'être conforme aux règlements.

Avec ces objectifs en vue, l'invention a pour objet un système de frein de parking à commande électrique comportant un boîtier de commande pourvu d'interrupteurs ayant une seule position stable en position d'ouverture, et d'un organe de commande manuelle des dits interrupteurs, le dit organe de commande étant monostable à rappel automatique dans une position de repos dans laquelle tous les interrupteurs sont ouverts,
caractérisé en ce que le boîtier comporte
- un seul premier interrupteur de commande du serrage des freins, agencé pour être fermé par une action sur l'organe de commande dans un premier sens,
- un seul deuxième interrupteur de commande du desserrage des freins, agencé pour être fermé par une action sur l'organe de commande dans un deuxième sens, opposé au premier,
- un circuit diagnosticable agencé pour fournir, en fonction de la position de l'organe de commande, une information analogique permettant de distinguer entre un état activé où l'un des dits premier et deuxième interrupteur est fermé, un état désactivé où les dits premier et deuxième interrupteur sont ouverts, et des états défaillants.

Le but du circuit diagnosticable, qui est raccordé à une source de courant, est de fournir, par le biais de la valeur de tension mesurée à ses bornes, et en complément au signal résultant de la fermeture d'un des deux interrupteurs, une information qui n'est pas limitée à un seul signal binaire, du type interrupteur fermé ou interrupteur ouvert, mais est aussi capable de signaler d'autres états du circuit, tels que notamment une coupure du circuit, un court circuit à la masse, ou un court circuit à l'alimentation. Pour assurer cette fonction, des systèmes mécaniques, optiques ou magnétiques sont envisageables, pourvu que la tension délivrée à l'état activé soit différente de la tension délivrée à l'état inactif, et toutes deux différentes des tensions délivrées en cas de circuit ouvert, court-circuit à la masse et court-circuit à l'alimentation.

Préférentiellement, le circuit diagnosticable comporte aux fins précitées un troisième interrupteur agencé pour être fermé par une action sur l'organe de commande quel que soit le sens de cette action et deux résistances d'une part raccordées toutes deux sur la masse et d'autre part raccordées respectivement de part et d'autre du troisième interrupteur. Ainsi, ce circuit permet de pouvoir mesurer à ses bornes :
- un premier niveau de tension correspondant à la position ouverte du troisième interrupteur, et étant la tension aux bornes d'une des deux résistances,
- un deuxième niveau de tension correspondant à la position fermée du troisième interrupteur, et étant la tension aux bornes du groupe des deux résistances associées en parallèle,
- un troisième niveau de tension correspondant à une défaillance du circuit par coupure, et étant une tension de niveau supérieur aux deux premiers niveaux, et notamment la tension de la source de courant,
- un quatrième niveau de tension correspondant à une défaillance du circuit par court circuit, et étant une tension de niveau inférieur aux deux premiers niveaux, et notamment une tension sensiblement nulle.

Pour exprimer cette capacité du circuit diagnosticable à fournir par le biais du seul troisième interrupteur une pluralité d'informations, on désignera aussi ce circuit par le nom d'interrupteur diagnosticable ou encore d'interrupteur analogique.

Pour analyser les différents signaux fournis par le boîtier de commande, et notamment déterminer les différentes tensions mentionnées ci-dessus, celles aux bornes des premier et deuxième interrupteurs, ainsi que leur évolution dans le temps, le boîtier de commande est relié à un calculateur qui comporte des moyens de mesure de la tension aux bornes du circuit diagnosticable et des tensions aux bornes du premier et du deuxième interrupteur.

Le calculateur est pourvu d'une horloge interne et de circuits de filtrage pour déterminer le niveau d'une tension en fonction de seuils de tensions prédéterminés et la durée de maintien d'une des dites tensions en fonction de seuils de temps prédéterminés, et doté d'un circuit logique apte à déduire en fonction des dites tensions et de leur combinaison et du temps, une information de commande de serrage ou desserrage des freins représentative de l'action effective exercée sur l'organe de commande.

Une telle logique sera détaillée par la suite. Parmi les fonctions de celle-ci, on notera en particulier
- une durée minimale de fermeture commune d'un des premier et deuxième interrupteurs, et du troisième interrupteur,
- une vérification que la fermeture d'un interrupteur n'est pas due à une cause extérieure inopportune, par exemple un choc extérieur sur le véhicule qui serait susceptible d'actionner involontairement un interrupteur,
- une vérification que le temps d'actionnement des interrupteurs est bien dans une fourchette prédéfinie, par exemple pour qu'une action de l'utilisateur sur l'organe de commande ne soit prise en compte que si ce temps est supérieur à une durée minimale prédéterminée, mais, inversement, qu'elle soit effectivement prise en compte même si cette durée est brève, ce qui implique une réactivité du système.

A ces fins, le calculateur comportera donc des circuits de filtrage agencés et ajustés pour permettre de répondre aux impératifs spécifiques du système de commande d'un type de véhicule ou d'application déterminé.

D'autres caractéristiques et avantages apparaîtront dans la description qui va être faite d'un système conforme à l'invention.

On se reportera aux dessins annexés dans lesquels :
- la figure 1 est une représentation du système en position de repos stable,
- la figure 2 est une vue correspondante dans la position de commande de serrage des freins,
- la figure 3 est une vue correspondante dans la position de commande de desserrage des freins,
- la figure 4 est une représentation des différents états de l'interrupteur analogique en fonction des tensions mesurés aux bornes du circuit diagnosticable,
- la figure 5 est un schéma illustrant la logique de fonctionnement de l'interrupteur analogique,
- la figure 6 illustre la logique de fonctionnement de l'ensemble du système de commande.
- la figure 7 illustre une variante de la logique de fonctionnement de l'ensemble du système de commande.

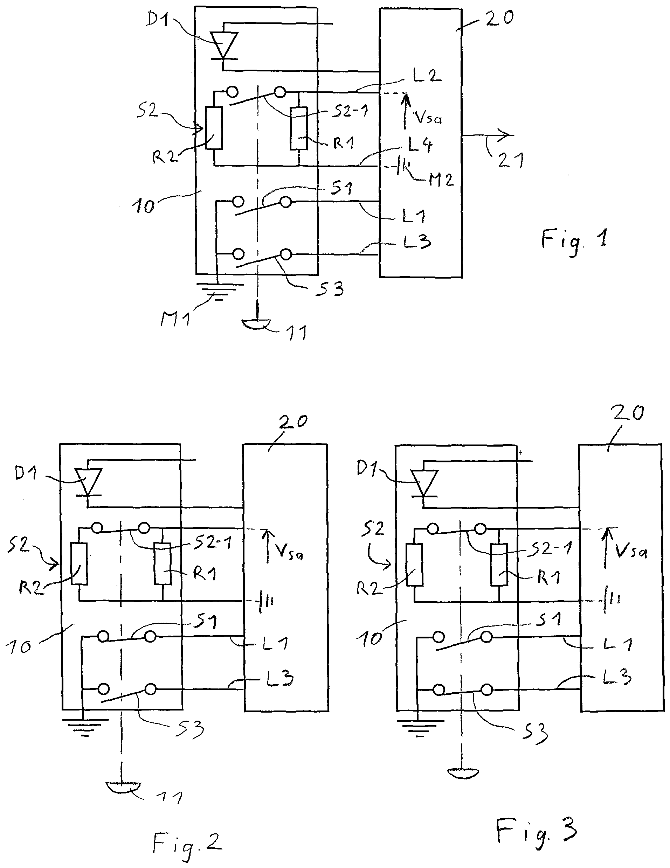

Le système représenté figure 1 comporte un boîtier de commande 10 connecté à un calculateur 20, qui fourni sur une sortie 21 un signal de pilotage des freins, pour assurer leur serrage ou leur desserrage.

Le boîtier de commande comporte un premier interrupteur S1 de serrage des freins, un deuxième interrupteur S3 de desserrage des freins, un circuit diagnosticable constitué par un interrupteur analogique diagnosticable S2 comprenant un troisième interrupteur S2-1, et une diode électroluminescente de contrôle D1.

Les interrupteurs de serrage S1 et de desserrage S3 sont normalement ouverts, comme représenté figure 1. Ils sont reliés par des lignes L1 et L3 au calculateur 20 et court-circuitent leurs liaisons L1 et L3 à la masse M1 du véhicule lorsqu'ils ont fermés.

Un bouton tirette-poussoir 11, ou autre organe de commande manuelle équivalent est agencé de manière à commander la fermeture des interrupteurs S1, S3 et S2-1 de la manière suivante :
- une action sur le bouton 11 dans un premier sens déterminé comme le sens de serrage entraîne la fermeture sensiblement synchrone des interrupteurs S1 et S2-1, comme illustré figure 2,
- une action sur le bouton 11 dans le sens inverse déterminé comme le sens de desserrage entraîne la fermeture des interrupteurs S3 et S2-1, comme illustré figure 3.

Par ailleurs, ce bouton tirette-poussoir 11 est également agencé de manière qu'il soit automatiquement rappelé dans la position de repos, représentée figure 1, dans laquelle les trois interrupteurs S1, S3 et S2-1 sont tous ouverts.

L'interrupteur analogique diagnosticable S2 comprend aussi une première résistance R1, de valeur relativement élevée, par exemple 2700 ohms, connectée entre la ligne L2, reliant une borne de l'interrupteur S2-1 au calculateur 2, et la ligne L4 reliée à la masse M2 du calculateur, et une deuxième résistance R2, de valeur relativement faible, par exemple 180 Ohms, connectée entre l'autre borne de l'interrupteur S2-1 et la ligne L4. Le calculateur 2 lit en permanence une tension Vsa sur la ligne L2 qui est donc variable en fonction de l'état fermé ou ouvert de l'interrupteur S2-1 et des éventuelles défaillances de l'interrupteur diagnosticable S2.

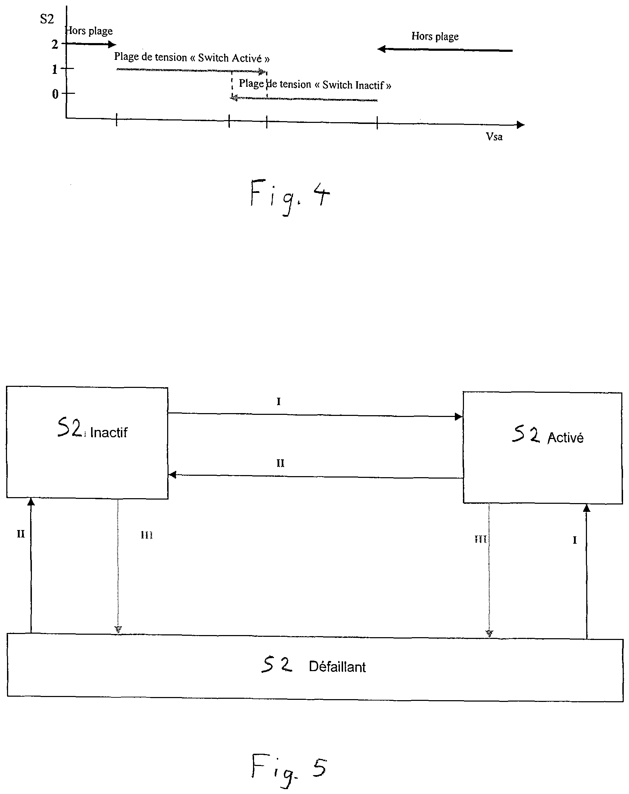

Comme illustré figure 4, la tension Vsa peut donc évoluer dans différentes plages de valeurs déterminant chacune un état de l'interrupteur analogique S2 :
- en absence de défauts et l'interrupteur S2-1 étant ouvert, Vsa est la tension mesurée aux bornes de la résistance R1 de valeur élevée, et se situe dans une plage de tension élevée, par exemple de 2,6 à 4,59 Volts, correspondant à un niveau inactif « N0 » de l'interrupteur analogique S2.
- en absence de défauts et l'interrupteur S2-1 étant fermé, Vsa est la tension mesurée aux bornes du groupement en parallèle de R1 avec R2 qui a une faible valeur de résistance, et se situe dans une plage de tension basse, par exemple de 0,5 à 2,1 Volts, correspondant à un niveau actif « N1 » de l'interrupteur analogique.
- en cas de court circuit à la masse, Vsa est très faible, par exemple inférieure à un seuil minimum de 0,4 Volts, et en cas de court circuit à l'alimentation, Vsa est supérieur à un seuil maximum de par exemple 4,6 Volts. Dans ces deux derniers cas, l'interrupteur analogique est dans un niveau de défaillance « N2 ».

Pour tenir compte par ailleurs des aléas des contacts électriques de l'interrupteur S2-1, les trois états de l'interrupteur analogique S2 ne sont en fait validé que par le maintien de la tension Vsa mesurée dans une des dites plage pendant un temps minimal prédéterminé, appelé temps de filtrage. Le temps de filtrage peut être le même ou être différent pour chaque plage de tension.

Tenant compte de ce temps de filtrage, la logique de fonctionnement de l'interrupteur analogique S2 est illustrée figure 5 :
- l'interrupteur analogique S2 est considéré activé si, partant d'un quelconque état inactif ou défaillant, la condition I suivante est respectée : Vsa appartient à la plage de tension de niveau « N1 » pendant un temps supérieur à un premier temps de filtrage t_{I},
- l'interrupteur analogique S2 est considéré inactif si, partant d'un quelconque état activé ou défaillant, la condition II suivante est respectée : Vsa appartient à la plage de tension de niveau « N0 » pendant un temps supérieur à un deuxième temps de filtrage t_{II},
- l'interrupteur analogique S2 est considéré défaillant si la condition III suivante est respectée : Vsa est dans l'une des plages de niveau « N2 » pendant un temps supérieur à un troisième temps de filtrage t_{III}.

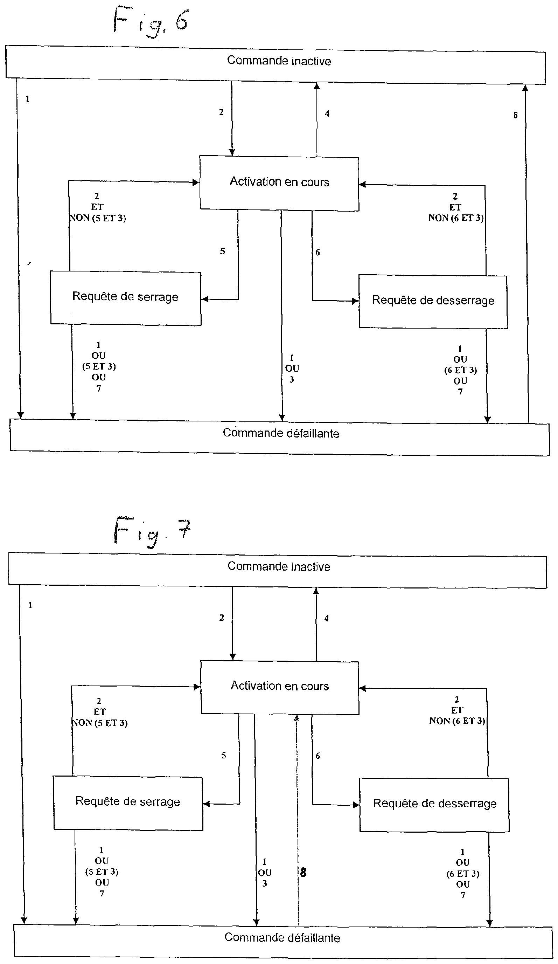

La figure 6 illustre la logique de fonctionnement du système de commande dans son ensemble.

La commande électrique peut être caractérisée par cinq états :
- commande inactive : S1 = 0 ; S2 = 0 ; S3 = 0, c'est à dire que tous les interrupteurs sont inactifs ;
- requête de serrage : S1 = 1 ; S2 = 1 ; S3 = 0 : lors d'une action sur le bouton 11 dans le sens de serrage, l'interrupteur S1 est fermé, et l'interrupteur analogique S2 est à l'état 1.
- requête de desserrage : S1 = 0 ; S2 = 1 ; S3 = 1 : lors d'une action sur le bouton 11 dans le sens de desserrage, l'interrupteur S3 est fermé, et l'interrupteur analogique S2 est à l'état 1.
- activation en cours : l'état d'activation des interrupteurs est incohérent, c'est-à-dire qu'un seul des deux interrupteurs S1 et S2, ou S2 et S3 est activé, pendant un temps t inférieur au temps de filtrage.
- commande défaillante, si S2 est défaillant.

La logique de fonctionnement est illustrée par le schéma de la figure 6 où les états activés du système sont « requête de serrage » et « requête de desserrage », l'état désactivé est « commande inactive », et où les repères 1 à 8 sont définis ainsi :
1: S2 défaillant: S2 = 2
2: commande en cours d'activation :S1 = 1 OU S2 = 1 OU S3 = 1
3: Etat d'activation des interrupteurs incohérent pendant t ≥ temps de filtrage (t2)
4: Commande inactive: S1 = 0; S2 = 0; S3 = 0
5: Requête de serrage: S1 = 1; S2 = 1; S3 = 0 pendant t > temps de filtrage (t3)
6: Requête de desserrage: S1 = 0; S2 = 1; S3 = 1 pendant t > temps de filtrage (t4)
7: Requête active pendant t > temps de filtrage (t5) - correspond à une commande bloquée.
8: Absence du défaut confirmée et commande inactive

Une variante de cette logique de fonctionnement est illustrée figure 7, avec les mêmes repères.

## Revendications

1. Système de frein de parking à commande électrique comportant un calculateur (20) et un boîtier de commande (10) relié au calculateur et pourvu d'interrupteurs ayant une seule position stable en position d'ouverture, et d'un organe de commande manuelle des dits interrupteurs, le dit organe de commande (11) étant monostable à rappel automatique dans une position de repos dans laquelle tous les interrupteurs sont ouverts,
**caractérisé en ce que** le boîtier comporte
- un seul premier interrupteur (S1) de commande du serrage des freins, agencé pour être fermé par une action sur l'organe de commande dans un premier sens,
- un seul deuxième interrupteur (S3) de commande du desserrage des freins, agencé pour être fermé par une action sur l'organe de commande dans un deuxième sens, opposé au premier,
- un circuit diagnosticable (S2) agencé pour fournir, en fonction de la position de l'organe de commande, une information analogique permettant de distinguer entre un état activé du système où l'un des dits premier et deuxième interrupteur est fermé, un état désactivé du système où les dits premier et deuxième interrupteur sont ouverts, et des états défaillants.

2. Système selon la revendication 1, **caractérisé en ce que** le circuit diagnosticable (S2) comporte à cette fin un troisième interrupteur (S2-1) agencé pour être fermé par une action sur l'organe de commande (11) quel que soit le sens de cette action et deux résistances (R1, R2) d'une part raccordées toutes deux sur la masse (M1) et d'autre part raccordées respectivement de part et d'autre du troisième interrupteur (S2-1).

3. Système selon la revendication 2, **caractérisé en ce qu'**une première résistance (R1) de valeur élevée est connectée entre la ligne (L2) reliant une borne de l'interrupteur (S2-1) au calculateur (20), et la ligne (L4) reliée à la masse (M2) du calculateur, et une deuxième résistance (R2) de valeur faible est connectée entre l'autre borne de l'interrupteur (S2-1) et la ligne (L4).

4. Système selon la revendication 1, **caractérisé en ce que** le calculateur (20) comporte des moyens de mesure de la tension (Vsa) aux bornes du circuit diagnosticable (S2) et des tensions aux bornes du premier et du deuxième interrupteur (S1, S3).

5. Système selon la revendication 4, **caractérisé en ce que** le calculateur (20) est pourvu d'une horloge interne et de circuits de filtrage pour déterminer le niveau d'une tension en fonction de seuils de tensions prédéterminés et la durée de maintien d'une des dites tensions en fonction de seuils de temps prédéterminés, et doté d'un circuit logique apte à déduire en fonction des dites tensions et de leur combinaison et du temps, une information de commande de serrage ou desserrage des freins représentative de l'action effective exercée sur l'organe de commande.

## Patentansprüche

1. Elektrisch bedientes Feststellbremssystem, umfassend einen Rechner (20) und ein Bediengehäuse (10), das mit dem Rechner verbunden und mit Schaltern, die eine einzige stabile Position in Öffnungsposition haben, und mit einem Elemente zur manuellen Bedienung der Schalter versehen ist, wobei das Bedienelement (11) monostabil mit automatischer Rückstellung in einer Ruheposition, in der alle Schalter offen sind, ist,
**dadurch gekennzeichnet, dass** das Gehäuse umfasst:
- einen einzigen ersten Schalter (S1) zur Steuerung des Anziehens der Bremsen, der dazu vorgesehen ist, durch eine Betätigung des Bedienelements in eine erste Richtung geschlossen zu werden,
- einen einzigen zweiten Schalter (S3) zur Steuerung des Lösens der Bremsen, der dazu vorgesehen ist, durch eine Betätigung des Bedienelements in eine zweite, zur ersten entgegengesetzte Richtung geschlossen zu werden,
- eine Diagnoseschaltung (S2), die dazu vorgesehen ist, in Abhängigkeit von der Position des Bedienelements eine analoge Information zu liefern, die es ermöglicht, zwischen einem aktivierten Zustand des Systems, in dem einer des ersten und zweiten Schalters geschlossen ist, einem deaktivierten Zustand des Systems, in dem der erste und zweite Schalter offen sind, und Fehlerzuständen zu unterscheiden.

2. System nach Anspruch 1, **dadurch gekennzeichnet, dass** die Diagnoseschaltung (S2) zu diesem Zweck einen dritten Schalter (S2-1), der dazu vorgesehen ist, durch eine Betätigung des Bedienelements (11) unabhängig von der Richtung dieser Betätigung geschlossen zu werden, und zwei Widerstände (R1, R2) umfasst, die einerseits beide an die Masse (M1) angeschlossen sind, und andererseits jeweils beiderseits des dritten Schalters (S2-1) angeschlossen sind.

3. System nach Anspruch 2, **dadurch gekennzeichnet, dass** ein erster Widerstand (R1) mit einem hohen Wert zwischen der Leitung (L2), die eine Klemme des Schalters (S2-1) mit dem Rechner (20) verbindet, und der Leitung (L4), die mit der Masse (M2) des Rechners verbunden ist, angeschlossen ist, und ein zweiter Widerstand (R2) mit einem niedrigen Wert zwischen der anderen Klemme des Schalters (S2-1) und der Leitung (L4) angeschlossen ist.

4. System nach Anspruch 1, **dadurch gekennzeichnet, dass** der Rechner (20) Mittel zum Messen der Spannung (Vsa) an den Klemmen der Diagnoseschaltung (S2) und der Spannungen an den Klemmen des ersten und des zweiten Schalters (S1, S3) umfasst.

5. System nach Anspruch 4, **dadurch gekennzeichnet, dass** der Rechner (20) mit einer inneren Uhr und Filterschaltungen versehen ist, um das Niveau einer Spannung in Abhängigkeit von vorbestimmten Spannungsgrenzen und der Dauer der Aufrechterhaltung einer der Spannungen in Abhängigkeit von vorbestimmten Zeitgrenzen zu bestimmen, und mit einer logischen Schaltung versehen ist, die geeignet ist, in Abhängigkeit von den Spannungen und ihrer Kombination und der Zeit eine Information zur Steuerung des Anziehens oder Lösens der Bremsen abzuleiten, die für die auf das Bedienelement tatsächlich ausgeübte Betätigung repräsentativ ist.

## Claims

1. Parking brake system with electric control comprising a computer (20) and a control housing (10) linked to the computer and provided with switches having a single stable position in the open position, and a manual control member for said switches, said control member (11) being of the monostable type with automatic return to a rest position in which all the switches are open,
**characterized in that** the housing comprises:
- a single first switch (S1) for controlling the actuation of the brakes, arranged to be closed by an action on the control member in a first direction,
- a single second switch (S3) for controlling the releasing of the brakes, arranged to be closed by an action on the control member in a second direction, opposite to the first,
- a diagnosable circuit (S2) arranged to supply, depending on the position of the control member, analog information making it possible to distinguish between an activated state of the system in which one of said first and second switches is closed, a deactivated state of the system where said first and second switches are open, and failed states.

2. System according to Claim 1, **characterized in that** the diagnosable circuit (S2) includes for this purpose a third switch (S2-1) arranged to be closed by an action on the control member (11) regardless of the direction of this action, and two resistors (R1, R2) on the one hand both connected to ground (M1) and on the other hand respectively connected either side of the third switch (S2-1).

3. System according to Claim 2, **characterized in that** a first high value resistor (R1) is connected between the line (L2) linking a terminal of the switch (S2-1) to the computer (20), and the line (L4) linked to the ground (M2) of the computer, and a second low value resistor (R2) is connected between the other terminal of the switch (S2-1) and the line (L4).

4. System according to Claim 1, **characterized in that** the computer (20) includes means of measuring the voltage (Vsa) at the terminals of the diagnosable circuit (S2) and the voltages at the terminals of the first and second switches (S1, S3).

5. System according to Claim 4, **characterized in that** the computer (20) is provided with an internal clock and filtering circuits for determining the level of a voltage according to predetermined voltage thresholds and the holding time of one of said voltages according to predetermined time thresholds, and fitted with a logic circuit able to deduce from said voltages and from their combination and from the time, a brake actuation or releasing command indication representative of the actual action exerted on the control member.
